# EUROPEAN PATENT SPECIFICATION

(11) **EP 3 392 129 B1**
(45) Date of publication and mention of the grant of the patent: **08.01.2020**
(21) Application number: 17201562.0
(22) Date of filing: 14.11.2017
(51) Int. Cl.: B62M 9/08, B62M 3/00

(54) **BICYCLE CRANKSET**
FAHRRADKURBELSATZ
PÉDALIER DE BICYCLETTE

(30) Priority: 18.04.2017 TW 106112980
(43) Date of publication of application: 24.10.2018
(73) Proprietor: Drivetrain Tech Solution Inc., Taichung City (TW)
(72) Inventor: CHEN, PO-CHENG, Taichung City (TW)
(74) Representative: Cabinet Chaillot

(56) References cited:
- CN-U- 206 938 994
- US-A1- 2005 022 626
- US-A1- 2014 047 948

## Description

### BACKGROUND OF THE INVENTION

### 1. Technical Field

The present invention relates to a bicycle, and more particularly to a bicycle crankset

### 2. Description of Related Art

Typically, a bicycle is provided with a round chainring, however more and more modern bicycle is provided with an elliptical chainring instead. The elliptical chainring has a directional parameter, which is an included angle between a major axis of the elliptical chainring and a plane of crankarms. The directional parameter determines the power of the bicycle. As a result, the manufactures may change the power of the bicycle by adjusting the directional parameter.

Document US2014047948 shows a known bicycle crankset, which is adapted to connect to a chain, comprising: a chainring having a plurality of teeth on an edge thereof to engage the chain, wherein the chainring has a chainring axis through a center thereof; a spider having a plurality of spider arms to detachably connect to the chainring and a connecting bore, wherein the spider has a bore axis through a center of the connecting bore; and a crankarm having a connecting member to engage the connecting bore of the spider.

Taiwan patent no. 1549862 disclosed an improvement of an ovoid bicycle chainring attachable to a crankarm, including drive-side crankarm with claws connected to an ovoid chainring. The claws have positioning portions. The ovoid chainring has several connecting portions to be connected to the positioning portions of the claws. A number of the connecting portions is a multiple of a number of the positioning portions to make the crankarm be connected to the ovoid chainring with different angle. In this patent, the crankarm may be adjusted for three degrees when the positioning portions are connected to the different connecting portions.

Taiwan utility model no. M410712 disclosed a crankset including a chain ring, a spider a crankarm, and a fixer. The chainring has a non-round outer edge and a round inner edge, and the inner edge is provided with teeth. The spider is provided with an annular connecting portion and teeth on the connecting portion. The teeth of the spider and the chainring are engaged to fix the spider to the chainring. The fixer secures the spider and the chainring to make the spider unable to move relative to the chainring. The spider may be engaged with the chainring with a specified angle, and then the fixer secures the spider and the chainring. As a result, the directional parameter as described above is adjustable by changing the angle of the spider.

### BRIEF SUMMARY OF THE INVENTION

In view of the above, the primary objective of the present invention is to provide a bicycle crankset, which provides different torque outputs according to the change of the loading when cycling.

The secondary objective of the present invention is to provide a bicycle crankset, which provides an easy way to adjust the torque output of the crankset.

Yet another objective of the present invention is to provide a bicycle crankset, which may always keep make the crankset in a correct assembling.

In order to achieve the objective of the present invention, a bicycle crankset, which is adapted to connect to a chain, includes a chainring having a plurality of teeth on an edge thereof to engage the chain, wherein the chainring has a chainring axis through a center thereof; a spider having a plurality of spider arms to detachably connect to the chainring and a connecting bore, wherein the spider has a bore axis through a center of the connecting bore; wherein the bore axis is kept a predetermined distance away from the chainring axis to form a deviation; and a crankarm having a connecting member to engage the connecting bore of the spider. Tips of the teeth of the chainring move in a noncircular path when the crankarm is exerted to drive the chainring to turn, and the noncircular path is adjustable by shifting a location of the connecting bore which changes the deviation.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is an exploded view of the chainring and the spider of a preferred embodiment of the present invention;
FIG. 2 is a perspective view of the chainring and the spider of the preferred embodiment of the present invention;
FIG. 3 is an exploded view of the preferred embodiment of the present invention;
FIG. 4 is a front view of the chainring and the spider of the preferred embodiment of the present invention;

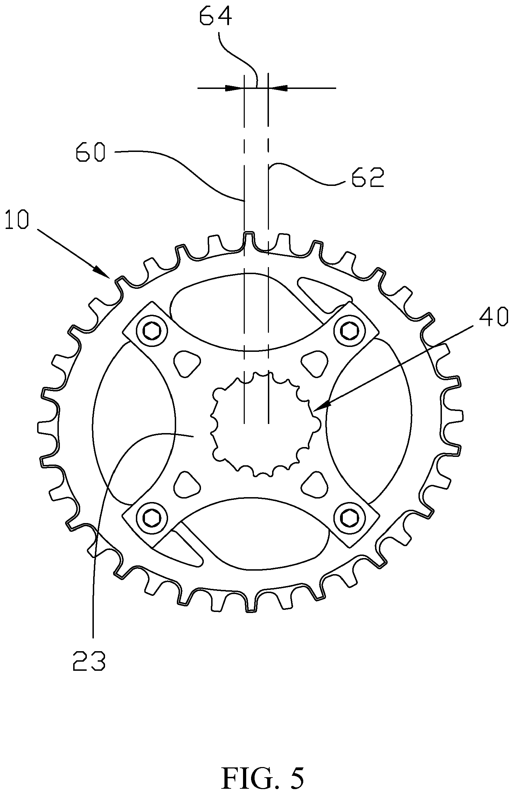

FIG. 5 is a front view of the chainring and the spider of the preferred embodiment of the present invention, showing the deviation;
FIG. 6 is a front view of the round chainring and the spider of the preferred embodiment of the present invention, showing the deviation;
FIG. 7 is a perspective view of the preferred embodiment of the present invention; and
FIG. 8 is a front view of the chainring and the spider of the preferred embodiment of the present invention, showing an alternate connecting bore.

### DETAILED DESCRIPTION OF THE INVENTION

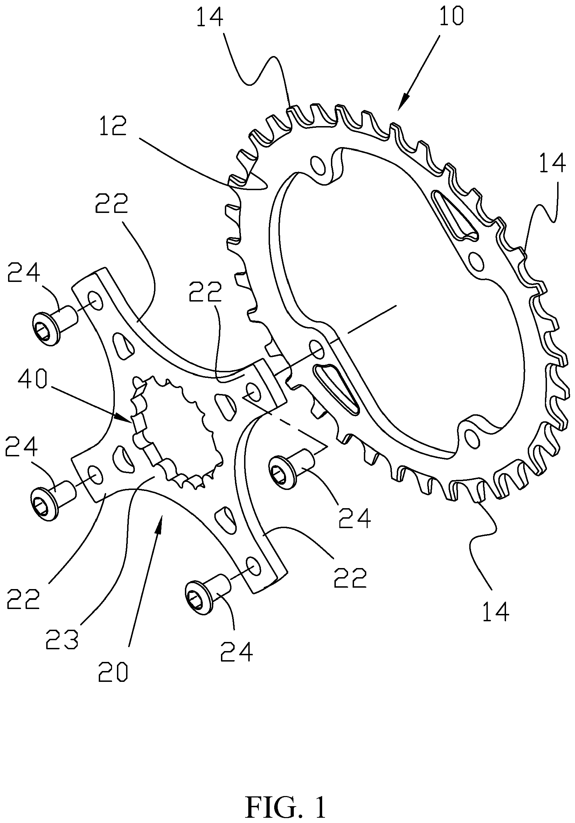

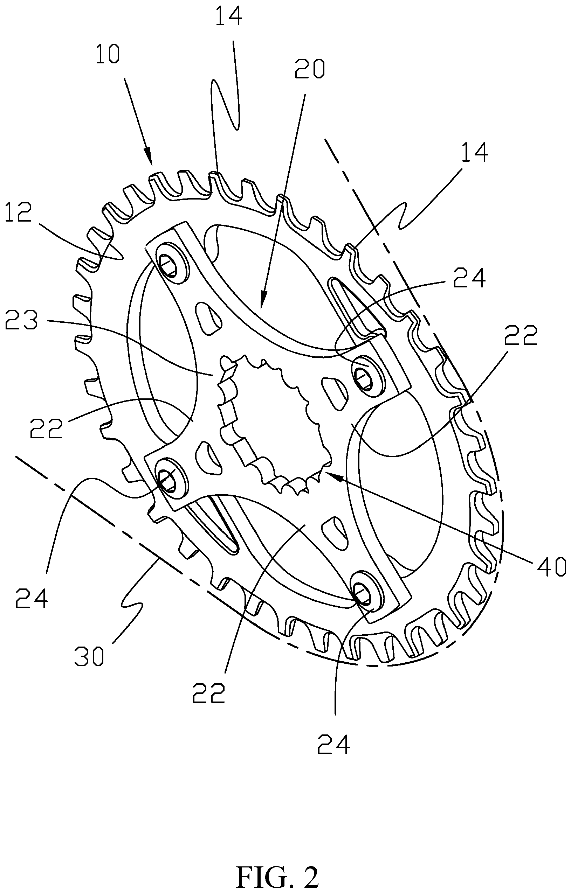

As shown in FIG. 1 and FIG. 2, a bicycle crankset of the preferred embodiment of the present invention includes a chainring 10 and a spider 20. The chainring 10 has an elliptical outer edge 12 and teeth 14 on the outer edge 12. Tips of the teeth 14 are in an elliptical circumference. The spider 20 has a plurality of spider arms 22 to be connected to the chainring 10 by fasteners 24. The fasteners 24 could be screws and bolts, which are able to be fastened and released repeatedly. The spider 20 has a central portion 23, from which the spider arms 22 are projected, and a connecting bore 40 at a center of the central portion 23. A chain 30 engages the teeth 24 of the chainring 10 (FIG. 2).

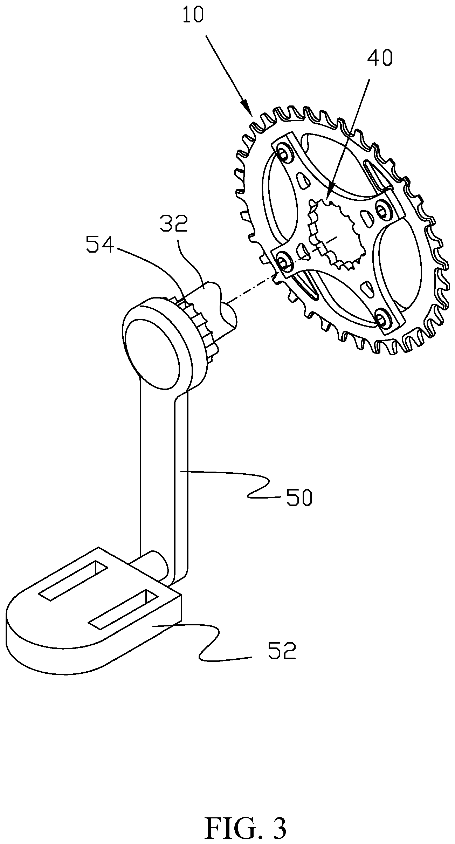

As shown in FIG. 3, a crankarm 50 has a pedal 52 at an end thereof, and a connecting member 54 at an opposite end thereof. The connecting member 54 has a shape complementary to the connecting bore 40 to be inserted into the connecting bore 40. An axle 32 has an end connected to the connecting member 54 of the crankarm 50, and an opposite end connected to another crankarm (not shown). These two crankarms usually are mounted 180° apart.

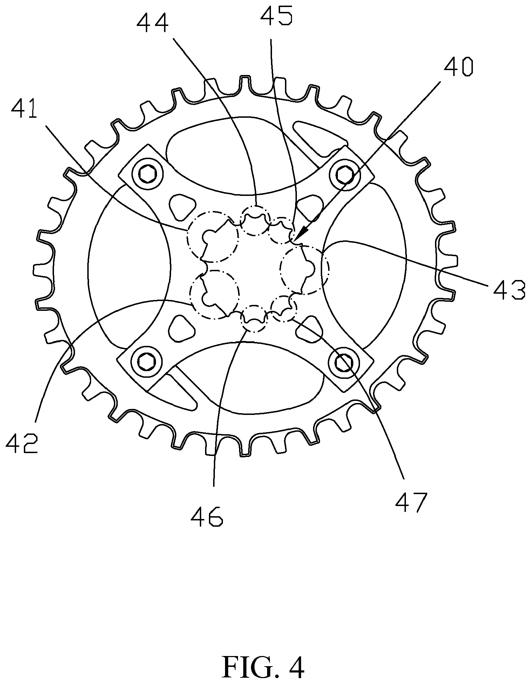

As shown in FIG. 4, the connecting bore 40 has a plurality of protruding portions and recessing portions on an edge thereof, including a first protruding portion 41, a second protruding portion 42, a third protruding portion 43, a first recessing portion 44, a second recessing portion 45, a third recessing portion 46, and a fourth recessing portion 47. The first protruding portion 41 is next to the second protruding portion 42, the first recessing portion 44 is next to the second recessing portion 45, and the third recessing portion 46 is next to the fourth recessing portion 47. The first protruding portion 41 is next to first recessing portion 44, the second protruding portion 42 is next to third recessing portion 46, and third protruding portion 43 is between the second recessing portion 45 and fourth recessing portion 47. The connecting bore 40 is unsymmetrical.

The chainring 10 has a chainring axis 60 through a center thereof, and connecting bore 40 has a bore axis 62 through center thereof. The axes 60 and 62 are kept a deviation 64. The first way to form the deviation 64 is that a center of the spider 20 is on the chainring axis 60 of the chainring 10, and the connecting bore 40 is not on the center of the spider 20. That is, the connecting bore 40 is eccentric relative to the spider 40.

The second way (not shown) to form the deviation 64 is that the bore axis 62 of the connecting bore 40 is not on a center of the spider 20, and the center of the spider 20 is not on the chainring axis 60 of the chainring 10, or the bore axis 62 of the connecting bore 40 is on a center of the spider 20, and the center of the spider 20 is not on the chainring axis 60 of the chainring 10.

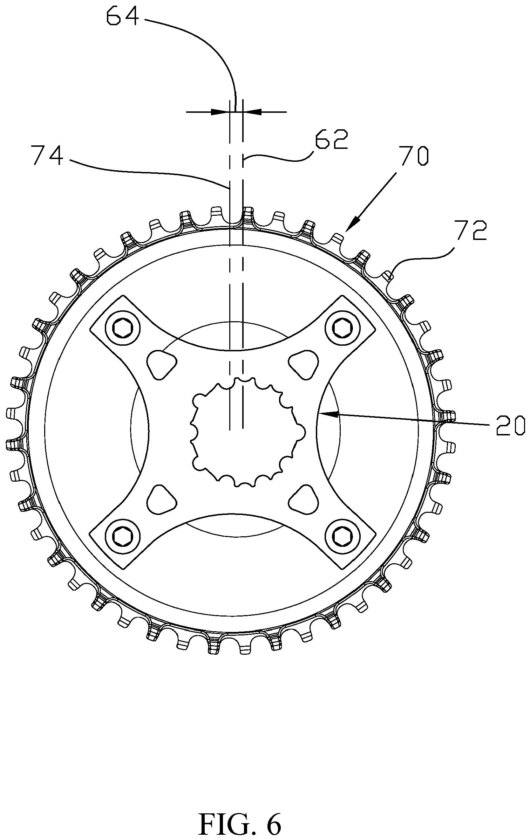

As shown in FIG. 6, a chainring 70 is provided with a plurality of teeth 72, and tips of the teeth 72 are in a round circumference. In other words, the chainring 70 is round. A chainring axis 74 runs through a center of the chainring 70. The spider 20 is connected to the chainring 70. The deviation 64 is a distance between the bore axis 62 and the chainring axis 74. The deviation 64 mat be formed by the first and the second way as described above, but not limited.

According to the description above, no matter the chainring 70 is round or elliptical, there always is a deviation 64 between the bore axis 62 and the chainring axis 74, so that the crankarm 50 is able to drive the spider 20 and the chainring 10 or 70 to turn, and the tips of the teeth of the chainring 10 or 70 move in a noncircular path, and the path is adjustable by changing the deviation 64. In an embodiment, the path is adjusted by replacing a different spider (not shown), on which a location of the connecting bore is different.

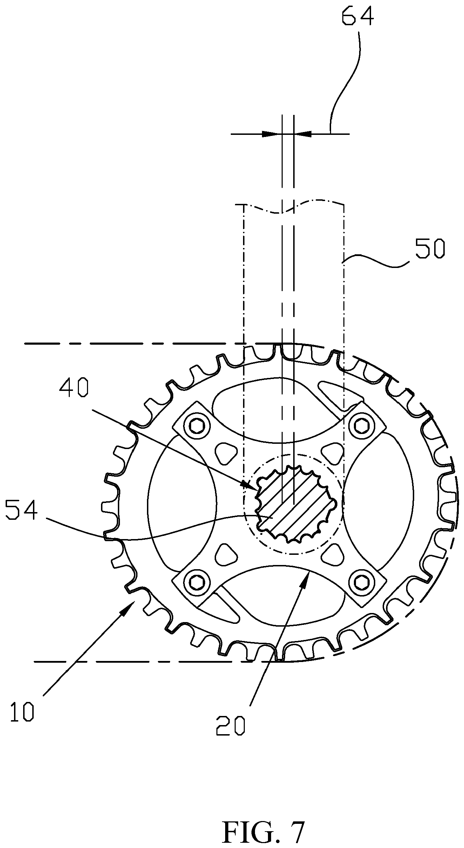

As shown in FIG. 7, the connecting bore 40 is unsymmetrical, and complementary to the connecting member 54, so that there is only one angle that the connecting member 54 may be inserted into the connecting bore 40 to may sure the deviation 64 is the predetermined one.

The deviation 64 makes tips of the teeth of the chainring 10 turn in a noncircular path, no matter the chainring 10 is round or elliptical.

In conclusion, the power output may be adjusted by replacing a new spider 20 to have a different deviation 64.

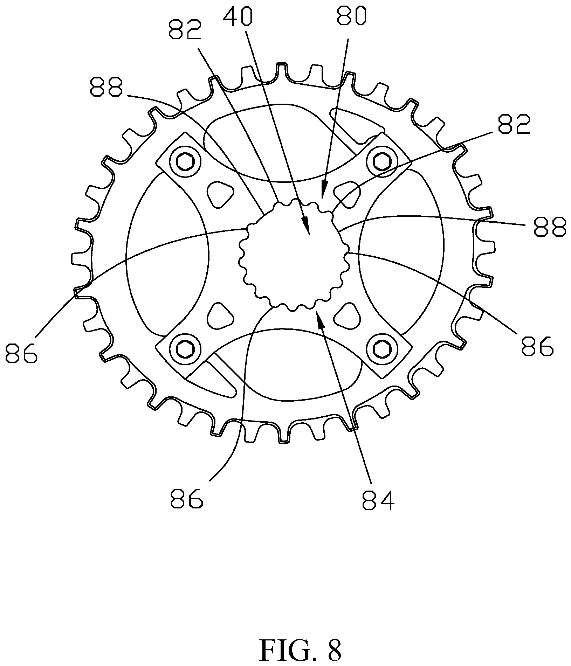

As shown in FIG. 8, it shows an alternate connecting bore 40. The connecting bore 40 has a first engaging portion 80, a second engaging portion 84, and two resting portions 88 on an edge thereof. The first engaging portion 80 has a plurality of first recesses 82, and the second engaging portion 84 has a plurality of second recesses 86. The resting portions 88 are between the first engaging portion 80 and the second engaging portion 84 respectively. A number of the first recesses 82 is not equal to a number of the second recesses 86 in the present preferred embodiment, and however, they may be equal in another embodiment. The resting portions 88 each has a straight edge in the present preferred embodiment, and they may have a curved edge in another embodiment. The first engaging portion 80, the second engaging portion 84, and the resting portions 88 make the crankarm (not shown) engage the spider in only one angle.

It must be pointed out that the embodiments described above are only some preferred embodiments of the present invention. All equivalent structures which employ the concepts disclosed in this specification and the appended claims should fall within the scope of the present invention.

## Claims

1. A bicycle crankset, which is adapted to connect to a chain (30), comprising:
a chainring (10) having a plurality of teeth (14) on an edge (12) thereof to engage the chain (30), wherein the chainring (10) has a chainring axis (60) through a center thereof;
a spider (20) having a plurality of spider arms (22) to detachably connect to the chainring (10) and a connecting bore (40), wherein the spider (20) has a bore axis (62) through a center of the connecting bore (40);
wherein the bore axis (62) is kept a predetermined distance away from the chainring axis (60) to form a deviation; and
a crankarm (50) having a connecting member (54) to engage the connecting bore (40) of the spider (20);
whereby tips of the teeth (14) of the chainring (10) move in a noncircular path when the crankarm (50) is exerted to drive the chainring (10) to turn, and the noncircular path is adjustable by shifting a location of the connecting bore (40) which changes the deviation.

2. The bicycle crankset of claim 1, wherein the tips of the teeth (14) of the chainring (10) are in a round circumference.

3. The bicycle crankset of claim 2, wherein the tips of the teeth (14) of the chainring (10) are in an elliptical circumference.

4. The bicycle crankset of claim 1, wherein the connecting bore has a first protruding portion (41), a second protruding portion (42), a third protruding portion (43), a first recessing portion (44), a second recessing portion (45), a third recessing portion (46), and a fourth recessing portion (47) on an edge thereof; the first protruding portion (41) is next to the second protruding portion (42), the first recessing portion (44) is next to the second recessing portion (45), and the third recessing portion (46) is next to the fourth recessing portion (47); the first protruding portion (41) is next to the first recessing portion (44), the second protruding portion (42) is next to the third recessing portion (46), and the third protruding portion (43) is between the second recessing portion (45) and fourth recessing portion (47).

5. The bicycle crankset of claim 1, wherein the connecting bore (40) has a first engaging portion (80), a second engaging portion (84), and two resting portions (88) on an edge thereof; the first engaging portion (80) has a plurality of first recesses (82), and the second engaging portion (84) has a plurality of second recesses (86); the resting portions (88) are between the first engaging portion (80) and the second engaging portion (84) respectively.

## Patentansprüche

1. Fahrradkurbelsatz, der zum Anschließen einer Kette (30) geeignet ist, umfassend:
einen Kettenring (10) mit einer Vielzahl von Zähnen (14) auf einer Kante (12) davon zum Eingreifen der Kette (30), wobei der Kettenring (10) eine Kettenringachse (60) durch ein Zentrum davon aufweist;
ein Drehkreuz (20) mit einer Vielzahl von Armsternen (22) zum lösbaren Anschließen an den Kettenring (10) und eine Anschlussbohrung (40), wobei das Drehkreuz (20) eine Bohrachse (62) durch ein Zentrum der Anschlussbohrung (40) aufweist;
wobei die Bohrachse (62) in einer vorbestimmten Entfernung von der Kettenringachse (60) weg gehalten ist, um eine Abschweifung zu bilden; und
wobei ein Kurbelarm (50) ein Anschlussglied (54) zum Eingreifen in die Anschlussbohrung (40) des Drehkreuzes (20) aufweist;
wobei Spitzen der Zähne (14) des Kettenrings (10) sich in einem nicht kreisförmigen Pfad bewegen, wenn der Kurbelarm (50) ausgeübt ist, um den Kettenring (10) zum Drehen anzutreiben und der nicht kreisförmige Pfad durch Verlagern einer Stelle der Anschlussbohrung (40) anpassbar ist, der die Abschweifung ändert.

2. Fahrradkurbelsatz gemäß Anspruch 1, wobei die Spitzen der Zähne (14) des Kettenrings (10) in einem runden Umfang sind.

3. Fahrradkurbelsatz gemäß Anspruch 2, wobei die Spitzen der Zähne (14) des Kettenrings (10) in einem elliptischen Umfang sind.

4. Fahrradkurbelsatz gemäß Anspruch 1, wobei die Anschlussbohrung einen ersten hervorstehenden Abschnitt (41), einen zweiten hervorstehenden Abschnitt (42), einen dritten hervorstehenden Abschnitt (43), einen ersten zurückgesetzten Abschnitt (44), einen zweiten zurückgesetzten Abschnitt (45), einen dritten zurückgesetzten Abschnitt (46) und einen vierten zurückgesetzten Abschnitt (47) auf einer Kante davon aufweist; der erste hervorstehende Abschnitt (41) ist neben dem hervorstehenden Abschnitt (42) angeordnet, der erste zurückgesetzte Abschnitt (44) ist neben dem zweiten zurückgesetzten Abschnitt (45) angeordnet und der dritte zurückgesetzte Abschnitt (46) ist neben dem vierten zurückgesetzten Abschnitt (47) angeordnet; der erste hervorstehende Abschnitt (41) ist neben dem ersten zurückgesetzten Abschnitt (44) angeordnet, der zweite hervorstehende Abschnitt (42) ist neben dem dritten zurückgesetzten Abschnitt (46) angeordnet und der dritte hervorstehende Abschnitt (43) ist zwischen dem zweiten zurückgesetzten Abschnitt (45) und dem vierten zurückgesetzten Abschnitt (47) angeordnet.

5. Fahrradkurbelsatz gemäß Anspruch 1, wobei die Anschlussbohrung (40) einen ersten eingreifenden Abschnitt (80), einen zweiten eingreifenden Abschnitt (84) und zwei Ruheabschnitte (88) auf einer Kante davon aufweist; der erste eingreifende Abschnitt (80) weist eine Vielzahl von ersten Rücksprüngen (82) auf und der zweiten eingreifende Abschnitt (84) weist eine Vielzahl von zweiten Rücksprüngen (86) auf; die Ruheabschnitte (88) sind jeweils zwischen dem ersten eingreifenden Abschnitt (80) und dem zweiten eingreifenden Abschnitt (84) angeordnet.

## Revendications

1. Pédalier de bicyclette, qui est adapté pour être relié à une chaîne (30), comprenant :
un plateau (10) ayant une pluralité de dents (14) sur un bord (12) de celui-ci pour engager la chaîne (30), le plateau (10) ayant un axe de plateau (60) passant par un centre de celui-ci ;
un croisillon (20) ayant une pluralité de bras de croisillon (22) pour être relié de manière détachable au plateau (10) et un alésage de liaison (40), le croisillon (20) ayant un axe d'alésage (62) passant par un centre de l'alésage de liaison (40) ;
l'axe d'alésage (62) étant maintenu à une distance prédéterminée de l'axe de plateau (60) pour former un écart ; et
une manivelle (50) ayant un élément de liaison (54) pour engager l'alésage de liaison (40) du croisillon (20) ;
ce par quoi des pointes des dents (14) du plateau (10) se déplace suivant un trajet non-circulaire lorsque la manivelle (50) est actionnée pour entraîner le plateau (10) en rotation, et le trajet non-circulaire est ajustable par décalage d'un emplacement de l'alésage de liaison (40), ce qui change l'écart.

2. Pédalier de bicyclette selon la revendication 1, dans lequel les pointes des dents (14) du plateau (10) se trouvent dans une circonférence ronde.

3. Pédalier de bicyclette selon la revendication 2, dans lequel les pointes des dents (14) du plateau (10) se trouvent dans une circonférence elliptique.

4. Pédalier de bicyclette selon la revendication 1, dans lequel l'alésage de liaison a une première partie en saillie (41), une deuxième partie en saillie (42), une troisième partie en saillie (43), une première partie en évidement (44), une deuxième partie en évidement (45), une troisième partie en évidement (46) et une quatrième partie en évidement (47) sur un bord de celui-ci ; la première partie en saillie (41) se trouve à côté de la deuxième partie en saillie (42), la première partie en évidement (44) se trouve à côté de la deuxième partie en évidement (45), et la troisième partie en évidement (46) se trouve à côté de la quatrième partie en évidement (47) ; la première partie en saillie (41) se trouve à côté de la première partie en évidement (44), la deuxième partie en saillie (42) se trouve à côté de la troisième partie en évidement (46), et la troisième partie en saillie (43) se trouve entre la deuxième partie en évidement (45) et la quatrième partie en évidement (47).

5. Pédalier de bicyclette selon la revendication 1, dans lequel l'alésage de liaison (40) a une première partie d'engagement (80), une seconde partie d'engagement (84) et deux parties d'appui (88) sur un bord de celui-ci ; la première partie d'engagement (80) a une pluralité de premiers évidements (82), et la seconde partie d'engagement (84) a une pluralité de seconds évidements (86) ; les parties d'appui (88) se trouvent entre la première partie d'engagement (80) et la seconde partie d'engagement (84), respectivement.
